# EUROPEAN PATENT APPLICATION

(11) **EP 3 505 286 A1**
(43) Date of publication of application: **03.07.2019**
(21) Application number: 18211519.6
(22) Date of filing: 11.12.2018
(51) Int. Cl.: B23K 9/09, B23K 9/10

(54) **SHIELDED METAL ARC WELDING SYSTEM AND WELDING POWER SUPPLY FOR SHIELDED METAL ARC WELDING**

(30) Priority: 14.12.2017 JP 2017239590
(71) Applicant: Daihen Corporation, Osaka 532-8512 (JP)
(72) Inventor: MIYAJIMA, Yuichi, Osaka-shi, Osaka 532-8512 (JP); GAMOU, Isamu, Osaka-shi, Osaka 532-8512 (JP)
(74) Representative: Boult Wade Tennant LLP

(57) **Abstract**

A welding power supply (A1) is configured to supply electric power to a coated electrode (B) . The welding power supply (A1) includes a rectifying circuit (1) that converts inputted AC power into DC power, and an inverter circuit (2) that converts the DC power into AC power to be outputted to the coated electrode (B). The inverter circuit (1) is configured to output a square-wave current.

## Description

### FIELD

The present disclosure relates to a system for shielded metal arc welding, and also to a welding power supply for shielded metal arc welding.

### BACKGROUND

Shielded metal arc welding is known as one of the conventional welding methods. JP-A-06-126459, for example, discloses a shielded metal arc welding system. Shielded metal arc welding, unlike CO₂ arc welding, does not need to use shielded gas, so that welding can be performed with relatively simple apparatus.

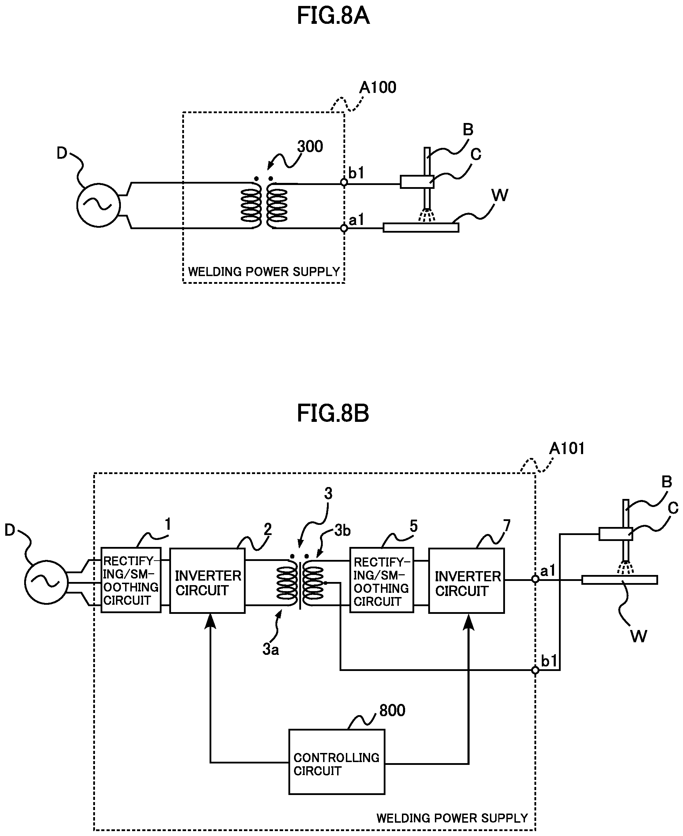

Fig. 8A is a block diagram showing an example of a conventional shielded metal arc welding system. The illustrated shielded metal arc welding system includes a coated electrode B, an electrode holder C for holding the coated electrode B, and a welding power supply A100 for supplying electric power to the coated electrode B via the electrode holder C. The welding power supply A100 is provided with a transformer 300 for transforming AC power. The AC power from a commercial power supply D is inputted to the primary side of the transformer 300, and outputted from the secondary side of the transformer 300 after the transformation. The welding power supply A100 has an output terminal a1 connected to a workpiece W and another output terminal b1 connected to the electrode holder C.

Fig. 8B is a block diagram showing a welding power supply A101 simulating the above-noted welding power supply A100. As shown in Fig. 8B, the welding power supply A101 includes a rectifying/smoothing circuit 1, an inverter circuit 2, a transformer 3, a rectifying/smoothing circuit 5, an inverter circuit 7 and a controlling circuit 800. The AC power inputted from the three-phase commercial power supply D is converted into DC power by the rectifying/smoothing circuit 1 and then converted into high-frequency power by the inverter circuit 2. The high-frequency power is transformed by the transformer 3, and converted into DC power by the rectifying/smoothing circuit 5. This DC power is converted into AC power by the inverter circuit 7 and outputted from the welding power supply A101. The controlling circuit 800 controls switching of the inverter circuit 2 to perform feedback control so that the output current from the welding power supply A101 follows the target current. Also, the controlling circuit 800 controls switching of the inverter circuit 7 so that sinusoidal alternating current is outputted as with the welding power supply A100.

In the above welding power supply A101, however, there is room for improvement in terms of power factors.

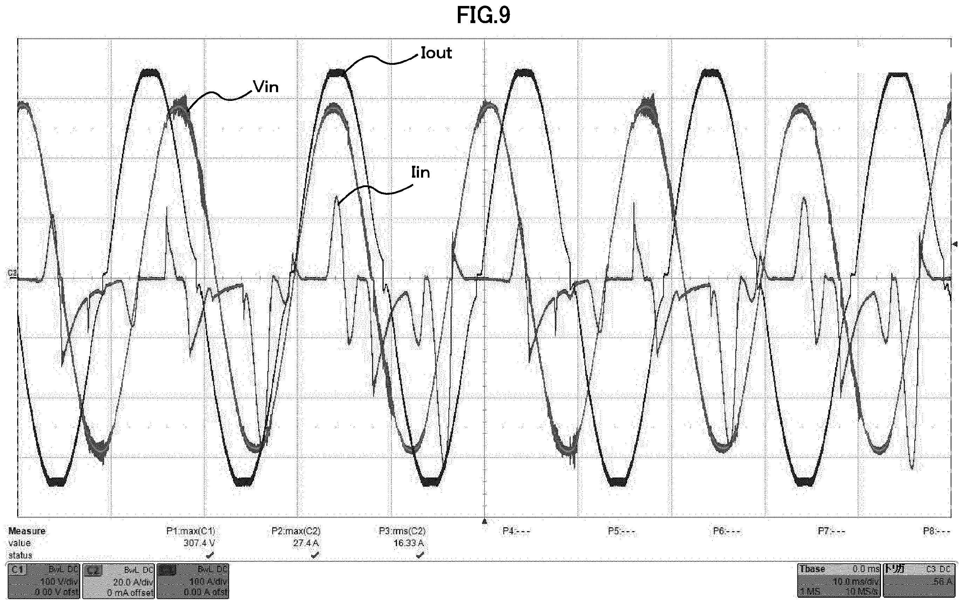

To elaborate on that above issue, the inventors performed welding using the welding power supply A101 with input of AC power from a commercial power supply D. Fig. 9 is a diagram showing the waveforms of input voltage Vin, input current Iin and output current Iout. The frequency of the commercial power supply D is 60 Hz. The frequency of the electric power outputted from the welding power supply A101 is 50 Hz. The input voltage Vin is 100 V (effective value), the input current Iin is 20 A (effective value), and the target current of the output current Iout is 100 A (effective value). The input voltage Vin and the input current Iin in the figure indicate the measurements of the input voltage and the input current for one of the three phases, and the other two phases have waveforms phase-shifted by 120° and 240°, respectively. As shown in Fig. 9, the waveform of the output current Iout from the inverter circuit 7 is sinusoidal (i.e., ever-changing) due to the control of the controlling circuit 800. In such a case, if the output current Iout is large (the absolute value of the instantaneous value is large) when the input voltage Vin is low (the absolute value of the instantaneous value is small), large input current Iin flows to maintain the output. Conversely, in the case where the output current Iout is small when the input voltage Vin is high, the input current Iin cannot flow much. In such a case, most of the flowing current is charging current for the smoothing circuit, which increases the reactive power. As shown in Fig. 9, the input current Iin is not stable, changing rapidly in accordance with the relationship between the input voltage Vin and the output current Iout. Moreover, since the reactive power is increased, the power factor is low. Note that the waveform of the input voltage Vin differs depending on the phase. Even if the power factor is not so low for one phase, the power factor is low for other phases, so that the power factor as a whole becomes low. The power factor actually measured was about 68 %.

### SUMMARY

The present disclosure has been proposed under the foregoing circumstances and aims to provide a shielded metal arc welding system with improved power factor.

According to a first aspect of the disclosure, there is provided a welding power supply for supplying electric power to a coated electrode. The welding power supply may include a rectifying circuit that converts AC power inputted to the rectifying circuit into DC power, and an inverter circuit that converts the DC power into AC power to be outputted to the coated electrode. The inverter circuit outputs a square-wave current.

According to a second aspect of the disclosure, there is provided a shielded metal arc welding system that may include a welding power supply in accordance with the above-noted first aspect, and a coated electrode that receives power supply from the welding power supply.

According to the welding power supply of the first aspect or the shielded metal arc welding system of the second aspect, the waveform of the current outputted from the inverter circuit is square. Hence, the output current is maintained at the peak level except the short period of time in which the direction of the current changes. Thus, less reactive power is generated, which is advantageous to increasing power factor.

### DRAWINGS

Fig. 1 is a block diagram showing the entire configuration of a shielded metal arc welding system according to a first embodiment;
Fig. 2A is a diagram showing an example of a charging circuit according to the first embodiment;
Fig. 2B is a diagram showing an example of a discharging circuit according to the first embodiment;
Fig. 3 is a time chart for explaining control of a restriking circuit and shows waveforms of various signals of a welding power supply;
Fig. 4 is a waveform diagram for explaining the waveform of input current of the welding power supply according to the first embodiment;
Fig. 5 shows the relationship between the output frequency and the power factor;
Fig. 6 is a block diagram showing the entire configuration of a shielded metal arc welding system according to a second embodiment;
Fig. 7 is a block diagram showing the entire configuration of a shielded metal arc welding system according to a third embodiment;
Fig. 8A is a block diagram showing an example of conventional shielded metal arc welding system;
Fig. 8B is a block diagram showing a shielded metal arc welding system including a welding power supply with an inverter circuit, which simulates the welding power supply shown in Fig. 8A; and
Fig. 9 is a waveform diagram for explaining the waveform of input current of the welding power supply shown in Fig. 8B.

### EMBODIMENTS

Embodiments of the present disclosure are described below with reference to the accompanying drawings.

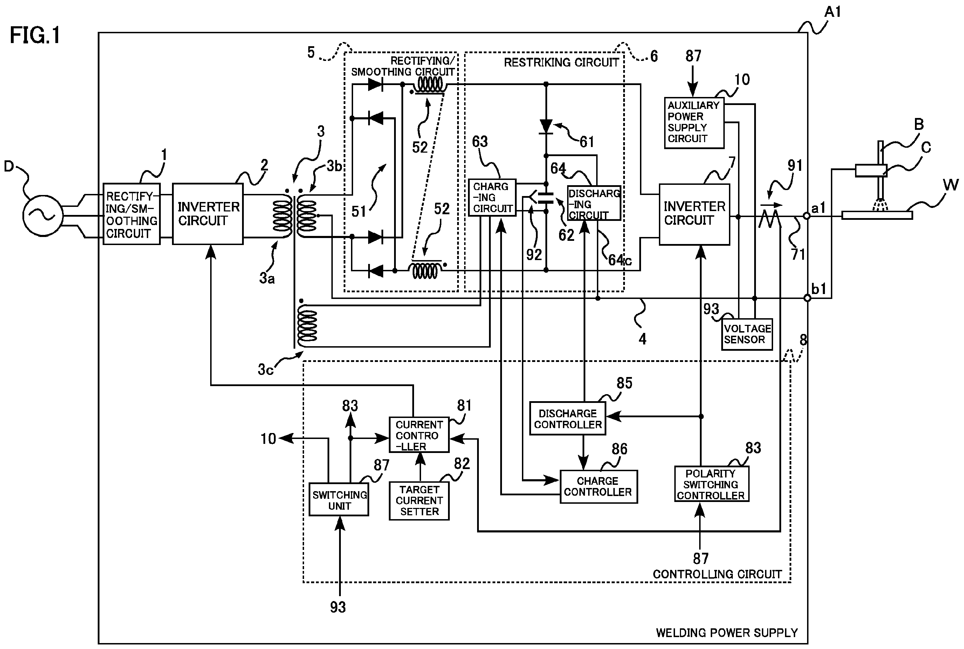

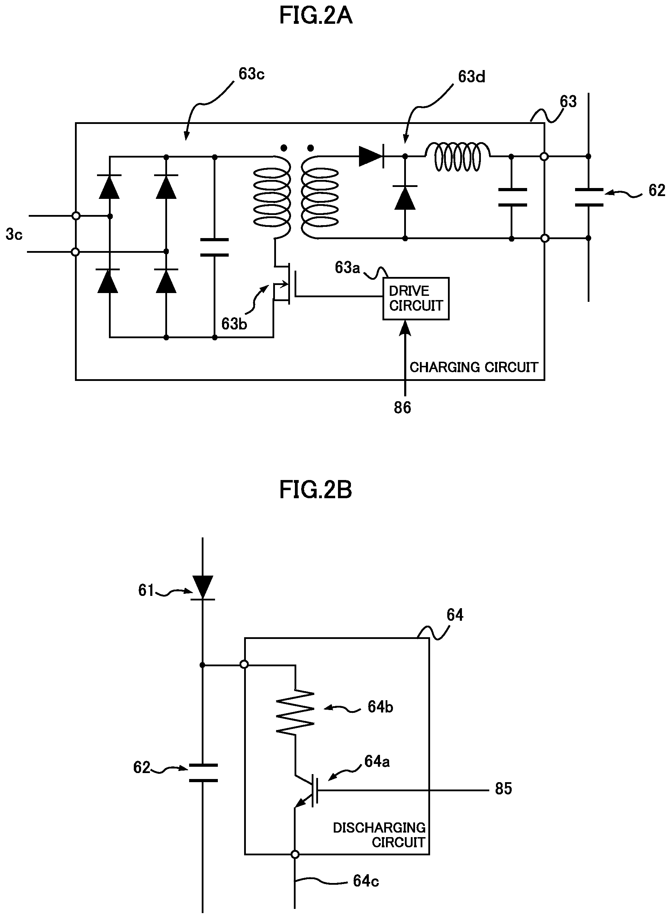

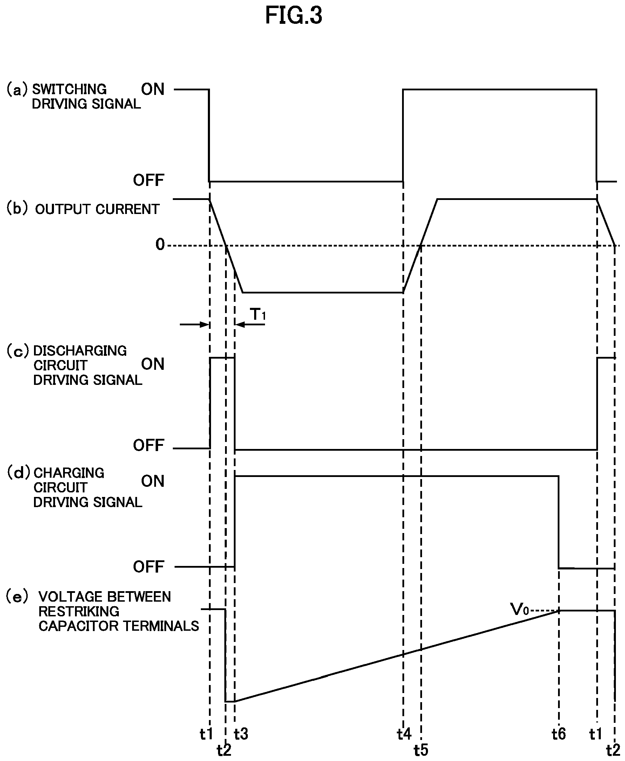

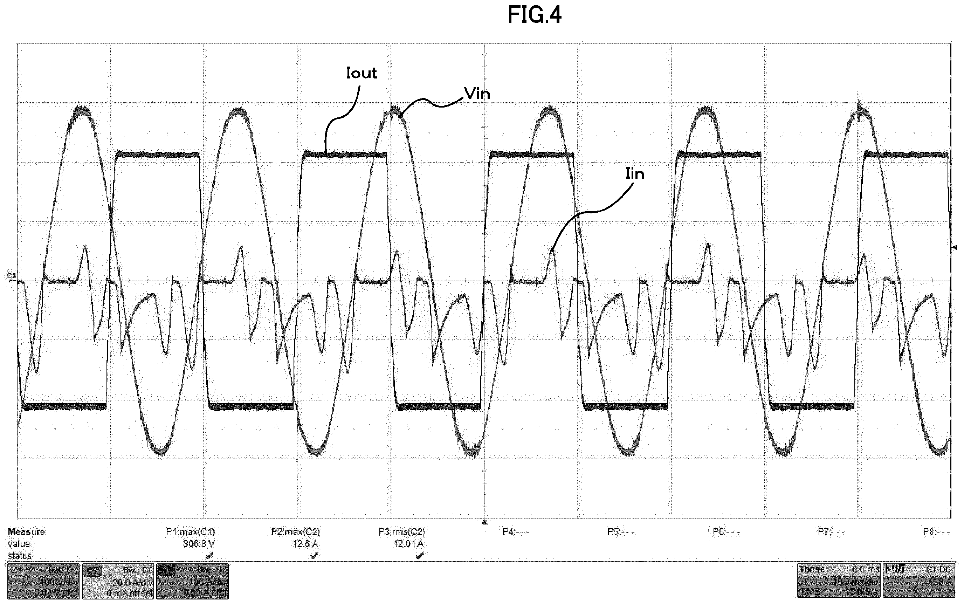

Figs. 1-4 are views for explaining a shielded metal arc welding system according to a first embodiment. Fig. 1 is a block diagram showing the internal configuration of a welding power supply A1 according to the first embodiment and shows the entire configuration of the shieldedmetal arc welding system. Fig. 2A is a circuit diagram showing an example of a charging circuit 63 of the welding power supply A1. Fig. 2B is a circuit diagram showing an example of a discharging circuit 64 of the welding power supply A1. Fig. 3 is a time chart for explaining control of a restriking circuit 6 and shows waveforms of various signals of the welding power supply A1. Fig. 4 is a waveform diagram for explaining the waveform of input current of the welding power supply according to the first embodiment.

As shown in Fig. 1, the shielded metal arc welding system includes a welding power supply A1, a coated electrode B and an electrode holder C. The electrode holder C is a part to be held by an operator in performing welding. The electrode holder C holds the coated electrode B and is configured to cause AC current inputted from the welding power supply A1 to flow through the coated electrode B. The welding power supply A1 converts the AC power inputted from a commercial power supply D and outputs the converted power via the output terminals a1 and b1. The output terminal a1 is connected to a workpiece W by a cable, and the output terminal b1 is connected to the electrode holder C by a cable. In the welding power supply A1, the tip of the coated electrode B is brought into contact with a workpiece W and then pulled away to form an arc.

The welding power supply A1 includes a rectifying/smoothing circuit 1, an inverter circuit 2, a transformer 3, a rectifying/smoothing circuit 5, a restriking circuit 6, an inverter circuit 7, a controlling circuit 8, a current sensor 91, voltage sensors 92 and 93, and an auxiliary power supply circuit 10.

The rectifying/smoothing circuit 1 converts the AC power inputted from the commercial power supply D into DC power and outputs the DC power. The rectifying/smoothing circuit 1 includes a rectifying circuit that rectifies an AC current and a smoothing capacitor for smoothing the rectified current. The configuration of the rectifying/smoothing circuit 1 is not particularly limited.

For example, the inverter circuit 2 is a single-phase full-bridge type PWM control inverter and has four switching elements . The inverter circuit 2 converts the DC power inputted from the rectifying/smoothing circuit 1 into high-frequency power by switching the switching elements based on output control driving signals inputted from the controlling circuit 8, and outputs the high-frequency power. The inverter circuit 2 may be a half-bridge inverter or another type of inverter circuit as long as it can convert DC power to high-frequency power.

The transformer 3 transforms the high-frequency voltage outputted from the inverter circuit 2 and outputs it to the rectifying/smoothing circuit 5. The transformer 3 includes a primary winding 3a, a secondary winding 3b and an auxiliary winding 3c. The input terminals of the primary winding 3a are connected to respective output terminals of the inverter circuit 2. The output terminals of the secondary winding 3b are connected to respective input terminals of the rectifying/smoothing circuit 5. The secondary winding 3b is provided with a center tap separately from the two output terminals. The center tap of the secondary winding 3b is connected to an output terminal b1 via a connection line 4. The output voltage from the inverter circuit 2 is transformed in accordance with the winding turns ratio of the primary winding 3a and the secondary winding 3b and inputted into the rectifying/smoothing circuit 5. The output terminals of the auxiliary winding 3c are connected to respective input terminals of the charging circuit 63. The output voltage from the inverter circuit 2 is transformed in accordance with the winding turns ratio of the primary winding 3a and the auxiliary winding 3c and inputted into the charging circuit 63. Since the secondary winding 3b and the auxiliary winding 3c are insulated from the primary winding 3a, the current inputted from the commercial power supply D is prevented from flowing to the circuits on the secondary side or the charging circuit 63.

The rectifying/smoothing circuit 5 converts the high-frequency power inputted from the transformer 3 into DC power and outputs the DC power. The rectifying/smoothing circuit 5 includes a full-wave rectifying circuit 51 that rectifies high-frequency current, and DC reactors 52 for smoothing the rectified current. The configuration of the rectifying/smoothing circuit 5 may be varied. In this disclosure, a combination of the rectifying/smoothing circuit 1, the inverter circuit 2, the transformer 3 and the rectifying/smoothing circuit 5 may be considered as a single rectifying circuit.

The DC reactors 52 are arranged on the positive-electrode-side connection line and on the negative-electrode-side connection line, respectively, that connect the full-wave rectifying circuit 51 and the inverter circuit 7. These two DC reactors 52 are coupled to each other. The DC reactors 52 release the stored energy at the time of polarity switching, thereby serving to prevent arc extinction. In the present embodiment, the self-inductance of each DC reactor 52 is set relatively low by improving the coupling of the two DC reactors 52. In the present embodiment, since the restriking circuit 6 applies restriking voltage in switching the polarity, the self-inductance of each DC reactor 52 can be low. In the present embodiment, the fluctuation of the input current is reduced, and the fluctuation of the current inputted into the DC reactor 52 is also reduced as will be described later, which also allows the self-inductance of each DC reactor 52 to be reduced. It is sufficient that the self-inductance of the DC reactors 52 is from about 20 to about 70 µH. In the present embodiment, the self-inductance is about 50 µH.

The inverter circuit 7 may be a single-phase full bridge inverter of PWM control and has two switching elements. The output terminal of the inverter circuit 7 is connected to the output terminal a1. In the inverter circuit 7, the switching elements are switched based on switching driving signals inputted from the controlling circuit 8 so as to alternately change the potential of the output terminal of the inverter circuit 7 (the potential of the output terminal a1) between the potential of the output terminal on the positive electrode side and the potential of the output terminal on the negative electrode side of the rectifying/smoothing circuit 5. By this operation, the inverter circuit 7 performs alternate switching between the forward polarity (where the potential of the output terminal a1 connected to the workpiece W is higher than the potential of the output terminal b1 connected to the coated electrode B via the electrode holder c) and the reversed polarity (where the potential of the output terminal a1 is lower than that of the output terminal b1). In this manner, the inverter circuit 7 converts the DC power inputted from the rectifying/smoothing circuit 5 into AC power and outputs the AC power. The current outputted from the inverter circuit 7 has a square waveform, meaning that the direction of the current changes at the time when the polarity changes and otherwise the amplitude is maintained at the maximum or the minimum value in a certain period of time. The inverter circuit 7 may have a configuration different from that described above as long as it outputs square wave alternating current.

The restriking circuit 6 is arranged between the rectifying/smoothing circuit 5 and the inverter circuit 7. The restriking circuit 6 applies restriking voltage across the output terminals a1 and b1 of the welding power supply A1 at the time of switching the output polarity of the welding power supply A1. The restriking voltage is a high voltage applied to achieve reliable restriking at the time of switching the polarity. Arc extinction is likely to occur when the output polarity switches from the forward polarity to the reversed polarity. In the present embodiment, therefore, the restriking circuit 6 applies the restriking voltage only when the polarity switches from the forward polarity to the negative polarity and does not apply the restriking voltage when the polarity switches from the reversed polarity to the forward polarity. The restriking circuit 6 includes a diode 61, a restriking capacitor 62, a charging circuit 63 and a discharging circuit 64.

The diode 61 and the restriking capacitor 62 are connected in series to each other and in parallel to the input side of the inverter circuit 7. The diode 61 has an anode terminal connected to the input terminal on the positive electrode side of the inverter circuit 7 and a cathode terminal connected to one of the terminals of the restriking capacitor 62. One of the terminals of the restriking capacitor 62 is connected to the cathode terminal of the diode 61, and the other terminal of the restriking capacitor 62 is connected to the input terminal on the negative electrode side of the inverter circuit 7. The restriking capacitor 62 has a predetermined capacitance and is charged with a restriking voltage that will be added to the output from the welding power supply A1. The restriking capacitor 62 is charged by the charging circuit 63 and discharged by the discharging circuit 64. Cooperating with the diode 61, the restriking capacitor 62 absorbs the surge voltage at the time of switching the inverter circuit 7. That is, the restriking capacitor 62 also functions as a snubber circuit for absorbing surge voltage.

The charging circuit 63 is a circuit for charging the restriking capacitor 62 for generating the restriking voltage and connected in parallel to the restriking capacitor 62. Fig. 2A shows an example of the charging circuit 63. As shown in the figure, the charging circuit 63 includes a rectifying/smoothing circuit 63c and an isolated forward converter 63d. The rectifying/smoothing circuit 63c includes a rectifying circuit that performs full-wave rectification of AC voltage and a smoothing capacitor for smoothing the rectified voltage. The rectifying/smoothing circuit 63c converts the high-frequency voltage inputted from the auxiliary winding 3c of the transformer 3 into DC voltage. The isolated forward converter 63d raises the DC voltage inputted from the rectifying/smoothing circuit 63c and outputs it to the restriking capacitor 62. The isolated forward converter 63d is provided with a drive circuit 63a for driving the switching element 63b. The drive circuit 63a outputs a pulse signal for driving the switching element 63b based on a charging circuit driving signal inputted from a charge controller 86. While the charging circuit driving signal is on (e.g. high-level signal), the drive circuit 63a outputs a predetermined pulse signal to the switching element 63b. This causes the restriking capacitor 62 to be charged. While the charging circuit driving signal is off (e.g. low-level signal), the drive circuit 63a does not output a pulse signal. Thus, charging of the restriking capacitor 62 is interrupted. In this way, based on the charging circuit driving signal, the charging circuit 63 performs switching between the state for charging the restriking capacitor 62 and the state for not charging the restriking capacitor 62. Note that the drive circuit 63a may be dispensed with, and the charge controller 86 may directly input a pulse signal as the charging circuit driving signal into the switching element 63b. The configuration of the charging circuit 63 may be varied. For example, the charging circuit 63 may be provided with a step-up chopper circuit, a step-down chopper circuit, instead of the isolated forward converter 63d. Further, the power to be supplied to the charging circuit 63 is not limited to the power from the auxiliary winding 3c of the transformer 3. For example, the transformer 3 may not include the auxiliary winding 3c, and the power may be supplied from the secondary winding 3b or other power supplies.

The discharging circuit 64 discharges the restriking voltage charged in the restriking capacitor 62. The discharging circuit 64 is connected between the connection point of the diode 61 and the restriking capacitor 62 and the connection line 4 that connects the center tap of the secondary winding 3b and the output terminal b1. Fig. 2B shows an example of the charging circuit 64. As shown in the figure, the discharging circuit 64 includes a switching element 64a and a current limiting resistor 64b. In the present embodiment, the switching element 64a is an IGBT (Insulated Gate Bipolar Transistor). The switching element may be a bipolar transistor, a MOSFET (Metal Oxide Semiconductor Field Effect Transistor) or the like. The switching element 64a and the current limiting resistor 64b are connected in series to each other and connected in series to the restriking capacitor 62. The collector terminal of the switching element 64a is connected to one of the terminals of the current limiting resistor 64b, and the emitter terminal of the switching element 64a is connected to the connection line 4 via the connection line 64c. Note that the current limiting resistor 64b may be connected to the emitter side of the switching element 64a. The discharge controller 85, which will be described later, inputs a discharging circuit driving signal to the gate terminal of the switching element 64a. While the discharging circuit driving signal is on (e.g. high-level signal), the switching element 64a is in the ON state. In this state, the restriking voltage charged in the restriking capacitor 62 is discharged via the current limiting resistor 64b. While the discharging circuit driving signal is off (e.g. low-level signal), the switching element 64a is in the OFF state . In this state, discharge of the restriking voltage is interrupted. In this way, based on the discharging circuit driving signal, the discharging circuit 64 is switched between the state for discharging the restriking capacitor 62 and the state for not discharging the restriking capacitor 62.

The current sensor 91 detects the output current from the welding power supply A1. In the present embodiment, the current sensor 91 is arranged on the connection line 71 that connects the output terminal of the inverter circuit 7 and the output terminal a1. In the present embodiment, current may flow from the inverter circuit 7 toward the output terminal a1 (which is referred to as "positive" state), or may flow from the output terminal a1 toward the inverter circuit 7 (which is referred to as "negative" state). The current sensor 91 detects the instantaneous value of the output current and inputs it to the controlling circuit 8. The current sensor 91 may have any configuration as long as it detects the output current from the connection line 71. Further, the position of the current sensor 91 is not limited to the illustrated one. For example, the current sensor 91 may be placed on the connection line 4.

The voltage sensor 92 detects the voltage between the terminals of the restriking capacitor 62. The voltage sensor 92 detects the instantaneous value of the voltage between the terminals and inputs it to the controlling circuit 8. The voltage sensor 93 detects the voltage between the output terminals a1 and b1. The voltage sensor 93 detects the instantaneous value of the voltage between the terminals and inputs it to the controlling circuit 8.

The auxiliary power supply circuit 10 is a power supply that applies an auxiliary voltage across the output terminals a1 and b1. The welding power supply A1 supplies power for welding in response to the timing when the tip of the coated electrode B (held in contact with the workpiece W) is separated from the workpiece W. To detect the timing, the auxiliary power supply circuit 10 applies an auxiliary voltage lower than the no-load voltage. For example, the auxiliary voltage is a DC voltage of 20 V. Application of a high no-load voltage during suspension of the welding operation can be dangerous for operators if they touch the coated electrode B by mistake. Thus, the auxiliary voltage to be applied may preferably be lower than the no-load voltage so as not to harm the operator. The auxiliary power supply circuit 10 for applying an auxiliary voltage may be provided separately from the power supply for supplying the power for welding. Instead of providing the auxiliary power supply circuit 10, the output from the inverter circuit 2 may be decreased to provide low no-load voltage . Part of the output power from the inverter circuit 2 is supplied to the auxiliary power supply circuit 10 via an auxiliary winding (not shown) of the transformer 3. The auxiliary power supply circuit 10 converts the inputted AC voltage into DC voltage and outputs it. As a variation, the auxiliary power supply circuit 10 may be configured to receive power from other power supply sources . The auxiliary power supply circuit 10 outputs the auxiliary voltage in response to a signal from a switching unit 87.

The controlling circuit 8 controls the welding power supply A1 and its function may be implemented by a microcomputer, for example. To the controlling circuit 8, the instantaneous value of the output current is inputted from the current sensor 91, the instantaneous value of the voltage between the terminals of the restriking capacitor 62 is inputted from the voltage sensor 92, and the instantaneous value of the voltage between the output terminals a1 and b1 is inputted from the voltage sensor 93. The controlling circuit 8 outputs a driving signal to each of the inverter circuit 2, the inverter circuit 7, the charging circuit 63 and the discharging circuit 64. The controlling circuit 8 includes a current controller 81, a target current setter 82, a polarity switching controller 83, a discharge controller 85, a charge controller 86 and a switching unit 87.

The current controller 81 controls the inverter circuit 2 for achieving feedback control with respect to the output current from the welding power supply A1. The current controller 81 converts the instantaneous value signal of the output current inputted from the current sensor 91 into an absolute value signal by using an absolute value circuit. Based on the deviation between the absolute value signal and the target current value inputted from the target current setter 82, the current controller 81 generates an output control driving signal for controlling the switching elements of the inverter circuit 2 by PWM control. The current controller 81 forwards generated output control driving signals to the inverter circuit 2 upon receiving a start signal from the switching unit 87.

The polarity switching controller 83 controls the inverter circuit 7 to switch the output polarity of the welding power supply A1. The polarity switching controller 83 generates a switching driving signal that is a pulse signal for controlling the switching elements to switch the output polarity of the inverter circuit 7. The polarity switching controller 83 outputs switching driving signals to the inverter circuit 7 upon receiving a start signal from the switching unit 87. The switching driving signal is outputted also to the discharge controller 85.

As shown in Fig. 3, the output current (see (b)) from the welding power supply A1 changes in accordance with the switching driving signal (see (a)). When the switching driving signal is on, the potential of the output terminal a1 (workpiece W) is higher than the potential of the output terminal b1 (coated electrode B) (i.e., forward polarity), while the switching driving signal is off, the potential of the output terminal a1 (workpiece W) is lower than the potential of the output terminal b1 (coated electrode B) (i.e., reversed polarity). The output current from the welding power supply A1 continues to decrease after the switching driving signal is changed from ON to OFF (time t1 in Fig. 3), changing its polarity at time t2 and reaching the minimum current value. On the other hand, the output current from the welding power supply A1 continues to increase after the switching driving signal is changed from OFF to ON (time t4 in Fig. 3), changing its polarity at time t5 and reaching the maximum current value. The time taken for the output current of the welding power supply A1 to change from the maximum current value to the minimum current value and the time taken for the output current of the welding power supply A1 to change from the minimum current value to the maximum current value are sufficiently short as compared with the period of the switching driving signal (hence the period of the output current). Thus, the output current can be considered as having a form of square waves.

The output frequency, i.e., the frequency of the output power (output voltage, output current) from the inverter circuit 7, becomes the same as the frequency of the switching driving signal. The frequency of the switching driving signal (output frequency) can be set appropriately and can be changed depending on the welding operation.

The discharge controller 85 controls the discharging circuit 64. Based on the switching driving signal inputted from the polarity switching controller 83, the discharge controller 85 generates a discharging circuit driving signal for controlling the discharging circuit 64 and outputs it to the discharging circuit 64. The discharging circuit driving signal is inputted also to the charge controller 86.

The discharge controller 85 generates the discharging circuit driving signal in such a manner that the discharging circuit driving signal is on when the output current from the welding power supply A1 changes from positive to negative. Specifically, the discharge controller 85 generates a pulse signal that switches to ON when the switching driving signal is switched from ON to OFF (time t1 in Fig. 3) and that switches to OFF (at time t3 in Fig. 3) after the lapse of a predetermined time period T₁ since the pulse signal was switched to ON. The discharge controller 85 outputs this pulse signal as the discharging circuit driving signal (see (c) in Fig. 3).

Time period T₁ is the period during which the discharge state is maintained. The time period T₁ is set to cover the timing (time t2 in Fig. 3) at which the output current of the welding power supply A1 changes from positive to negative.

The manner in which the discharge controller 85 generates the discharging circuit driving signal is not limited to the above. It is only required that the restriking voltage is applied when the output current from the welding power supply A1 changes from positive to negative, so that the discharging circuit driving signal is only required to become ON before the output current changes from positive to negative and become OFF after the output current is changed from positive to negative . For example, the discharge controller 85 may generate the discharging circuit driving signal based on the output current from the welding power supply A1. Specifically, the discharge controller 85 may switch the discharging circuit driving signal to OFF when the instantaneous value of the output current drops below a predetermined current I₁. The current I₁ is a current value between the minimum current value and zero for determining the completion of the arc restriking. The current I₁ is set to a value that enables reliable determination of the changing of the output current direction even if the value of the detected output current contains a certain error.

The charge controller 86 controls the charging circuit 63. The charge controller 86 generates a charging circuit driving signal for driving the charging circuit 63 based on the discharging circuit driving signal inputted from the discharge controller 85 and the instantaneous value of the voltage between the terminals of the restriking capacitor 62 inputted from the voltage sensor 92, and outputs the charging circuit driving signal to the charging circuit 63.

As shown in Fig. 3, when the direction of the output current changes (time t2 in Fig. 3) after the discharging circuit driving signal ((c) in Fig. 3) is switched to ON (time t1 in Fig. 3), the voltage between terminals of the restriking capacitor 62 (see (e) in Fig. 3) drops sharply because of the flow of the restriking current. The restriking capacitor 62 needs to be charged with the restriking voltage before the timing of the next discharge. When the restriking capacitor 62 is charged to the target voltage V₀, further charging is not necessary. Thus, the charge controller 86 generates the charging circuit driving signal so that the charging circuit driving signal is on from when the restriking capacitor 62 is discharged till when the restriking capacitor 62 is charged to the target voltage V₀. Specifically, the charge controller 86 generates a pulse signal that switches to ON when the discharging circuit driving signal inputted from the discharge controller 85 is switched from ON to OFF (time t3 in Fig. 3) and that switches to OFF when the voltage between the terminals of the restriking capacitor 62 has reached the target voltage V₀ (time t6 in Fig. 3). The charge controller 86 outputs this pulse signal as the charging circuit driving signal (see (d) in Fig. 3).

The manner in which the charge controller 86 generates the charging circuit driving signal is not limited to the above . The timing of the start and end of charging is not limited, and it is only required that the restriking capacitor 62 is charged with the restriking voltage before the timing of next discharge.

The switching unit 87 switches the voltage applied to the output terminals a1 and b1 between the auxiliary voltage outputted from the auxiliary power supply circuit 10 and the voltage outputted from the inverter circuit 7. When the welding power supply A1 is activated, the switching unit 87 outputs a start signal to the auxiliary power supply circuit 10 to cause the auxiliary power supply circuit 10 to output the auxiliary voltage. When the voltage between the output terminals a1 and b1 inputted from the voltage sensor 9 rises to a threshold value after once dropped to approximately zero, the switching unit 87 determines that the tip of the coated electrode B is separated from the workpiece W after brought into contact with the workpiece W and hence performs the voltage switching. Specifically, the switching unit 87 outputs a stop signal to the auxiliary power supply circuit 10 to make the auxiliary power supply circuit 10 stop outputting the auxiliary voltage, and outputs a start signal to the current controller 81 and the polarity switching controller 83 to start the output from the inverter circuit 7. Note that the determination by the switching unit 87 that the tip of the coated electrode B is separated from the workpiece W after brought into contact with the workpiece W may be performed based on the output current detected by the current sensor 91.

The operation and advantages of the shielded metal arc welding system according to the present embodiment are described below.

According to the present embodiment, arc welding is performed by forming an arc between the tip of the coated electrode B and the workpiece W using the AC power outputted from the welding power supply A1. The controlling circuit 8 controls the inverter circuit 7 so that the waveform of the output current Iout becomes square. Accordingly, the output current Iout is always maintained at the peak level except the short period of time in which the direction of the current changes . Thus, reactive power is unlikely to be generated, which leads to increased power factor.

Fig. 4 is a waveform diagram for explaining the waveform of the input current of the welding power supply A1. Welding was performed using the welding power supply A1 by actually inputting AC power from a commercial power supply D. Fig. 4 shows the waveforms of the input voltage Vin, the input current Iin and the output current Iout which were actually measured in welding. Since the frequency of the commercial power supply D is 60 Hz, the input frequency is 60 Hz. The output frequency is set to 50 Hz. The effective value of the input voltage Vin is 100 V, the effective value of the input current Iin is 20 A, and the target current of the output current Iout is 100 A. The input voltage Vin and the input current Iin in the figure indicate the measurements of the input voltage and the input current of one of the three phases inputted from the commercial power supply D. The input voltage and the input current of other two phases have waveforms phase-shifted by 120° and 240°, respectively, from the waveform of the input voltage Vin and the input current Iin shown in Fig. 4. As shown in Fig. 4, due to the control of the inverter circuit 7 with the controlling circuit 8, the waveform of the output current Iout is square. Accordingly, the output current Iout is always kept at the peak level except the short period of time in which the direction of the current changes. Thus, the input current Iin does not change greatly and is stable. The power factor actually measured in the welding power supply A1 was about 77%, which is considerable improvement as compared with the power factor (68%) in the case of the welding power supply A100 shown in Fig. 8B.

Moreover, according to the present embodiment, the self-inductance of the DC reactors 52 (e.g. about 50 µH) is considerably lower than the self-inductance (e.g. about 165 µH) in a conventional configuration. This contributes to power factor enhancement. Further, since the responsiveness is improved, the system can deal with high output frequencies.

According to the present embodiment, the discharge controller 85 of the welding power supply A1 generates the discharging circuit driving signal in such a manner that the discharging circuit driving signal is on when the output current from the welding power supply A1 changes from positive to negative . The discharge controller 85 inputs the discharging circuit driving signal to the discharging circuit 64. Thus, the discharging circuit 64 discharges and applies the restriking voltage charged in the restriking capacitor 62 when the output current from the welding power supply A1 changes from positive to negative. Thus, arc extinction at the time when the output polarity of the welding power supply A1 switches from forward polarity to reversed polarity is prevented.

According to the present embodiment, the discharging circuit 64 controls the discharge based on the discharging circuit driving signal inputted from the discharge controller 85. The discharging circuit driving signal (see (c) in Fig. 3) switches to ON when the switching driving signal (see (a) in Fig. 3) is switched, and then switches to OFF after the lapse of the time period T₁. Thus, the discharging circuit driving signal is always on when the output current from the welding power supply A1 changes from positive to negative . This allows the discharging circuit 64 to properly apply the restriking voltage.

According to the present embodiment, the charging circuit 63 controls the charge based on the charging circuit driving signal inputted from the charge controller 86. The charging circuit driving signal (see (d) in Fig. 3) switches to ON when the discharging circuit driving signal (see (c) in Fig. 3) is switched to OFF. Thus, the charging circuit 63 starts charging immediately after the discharge. Thus, sufficient charging time is secured before the next discharge . The charging circuit driving signal switches to OFF when the voltage between the terminals of the restriking capacitor 62 (see (e) in Fig. 3) reaches the target voltage V₀. Thus, the charging circuit 63 does not excessively charge the restriking capacitor 62.

The present embodiment has described the welding power supply A1 in which the AC power having a frequency of 60 Hz (input frequency) is inputted from the commercial power supply D and AC power having a frequency of 50 Hz (output frequency) is outputted. However, the present disclosure is not limited to this. The input frequency is not limited, and the output frequency is not limited either. The output frequency may be set to a desired frequency, and some frequencies may contribute to further improvement of the power factor.

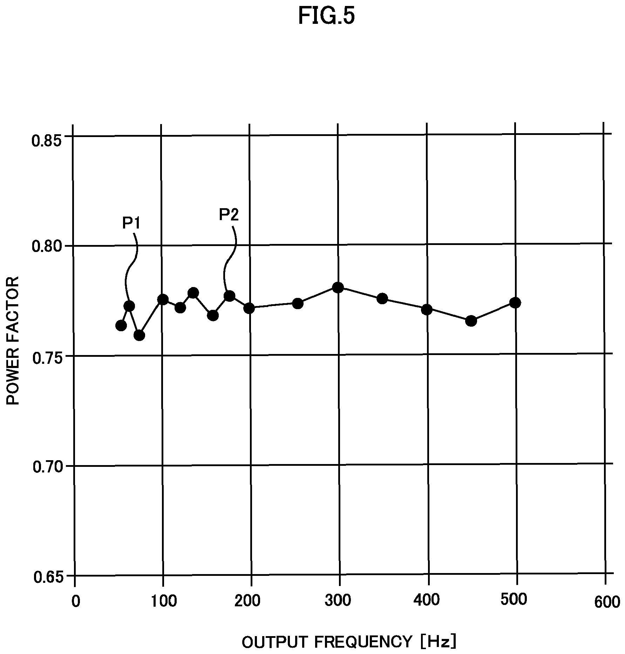

Fig. 5 shows the relationship between the output frequency and the power factor. Specifically, with the input frequency fixed at 60 Hz, the output frequency was changed to measure the power factor. Fig. 5 shows the measurement results. The horizontal axis indicates the output frequency, whereas the vertical axis indicates the power factor. As shown in Fig. 5, the power factor is highest when the output frequency is 300 Hz. Further, although there are some up-and-down variations, the power factor generally increases with increasing output frequency in the output frequency range of 300 Hz or less, whereas the power factor generally decreases with increasing output frequency in the output frequency range of 300 Hz or more. Moreover, the power factor tends to be higher than the power factors at its closest frequencies when the output frequency is a natural number multiple of the input frequency, i.e., an N multiple of the input frequency, where N is a natural number 1, 2, 3, .... For example, the power factor P1 when the output frequency is 60 Hz is higher than that when the output frequency is 50 Hz or 70 Hz, and the power factor P2 when the output frequency is 180 Hz is higher than that when the output frequency is 160 Hz or 200 Hz. Therefore, if the increase of the power factor is the only concern, it is favorable to set the output frequency to 300 Hz when the input frequency is 60 Hz. As known in the art, a higher output frequency results in greater concentration, and hence a deeper penetration and a thinner weld bead. Generally, shielded metal arc welding tends to provide shallow penetration and a thick weld bead. To make the penetration deeper and the weld bead thinner, the output frequency may be set high. To keep the penetration shallow and the weld bead thick, like the conventional shielded metal arc welding, the output frequency may be set low. The output frequency may be made switchable between the frequencies that are natural number multiples of the input frequency. This allows switching of the output frequency so as to form a weld bead of a desired shape while enhancing the power factor.

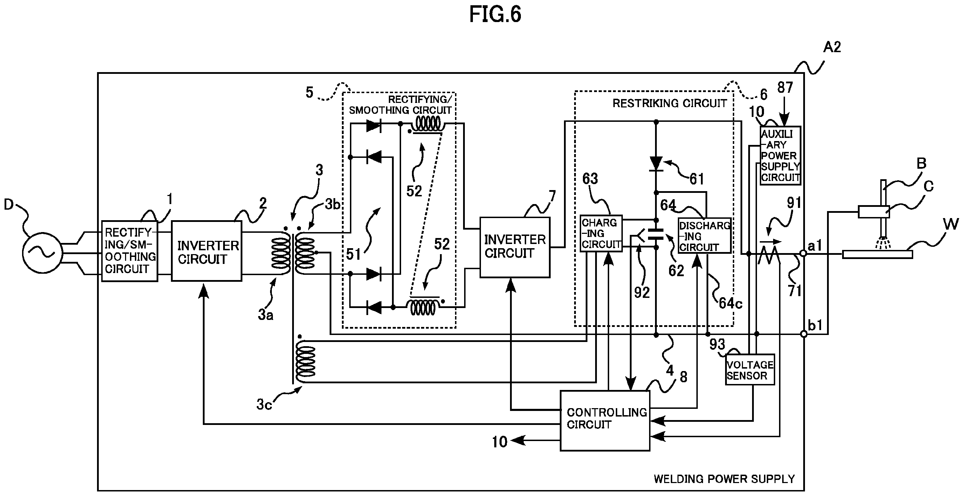

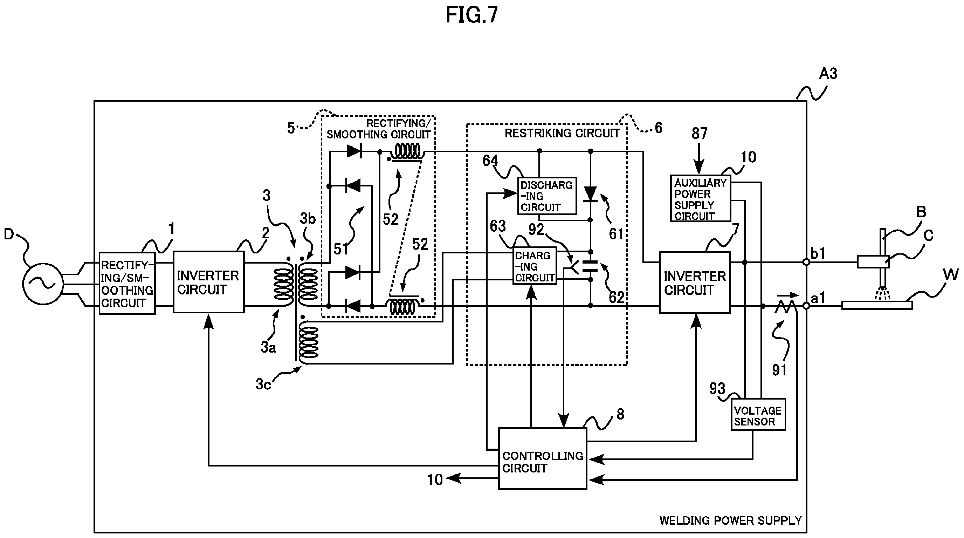

Figs. 6 and 7 show other embodiments of the present disclosure. In these figures, the elements that are identical or similar to those of the foregoing embodiment are designated by the same reference signs as those used for the foregoing embodiment.

Fig. 6 is a block diagram of the internal configuration of a welding power supply A2 according to the second embodiment and shows the entire configuration of the shielded metal arc welding system. Note that, in Fig. 6, illustration of the internal configuration of the controlling circuit 8 is omitted. The welding power supply A2 shown in Fig. 6 differs from the welding power supply A1 according to the first embodiment (see Fig. 1) in that the restriking circuit 6 is arranged on the output side of the inverter circuit 7. In the present embodiment, since the restriking capacitor 62 does not function as a snubber circuit for the inverter circuit 7, the wiring on the negative side of the diode 61 and the restriking capacitor 62 (the wiring connected to the connection line 4) may be dispensed with.

In the second embodiment again, the effects similar to those of the first embodiment are achieved.

Fig. 7 is a block diagram showing the internal configuration of a welding power supply A3 according to the third embodiment and shows the entire configuration of the shielded metal arc welding system. Note that, in Fig. 7, illustration of the internal configuration of the controlling circuit 8 is omitted. The welding power supply A3 shown in Fig. 7 differs from the welding power supply A1 according to the first embodiment (see Fig. 1) in that the inverter circuit 7 is a full-bridge inverter.

For example, the inverter circuit 7 according to the third embodiment is a single-phase full-bridge inverter with PWM control and has four switching elements. The inverter circuit 7 has an output terminal connected to the output terminal a1 and another output terminal connected to the output terminal b1. By switching the switching elements based on the switching driving signal inputted from the controlling circuit 8, the inverter circuit 7 performs switching between the two states: the state in which the potential of the one of the output terminals of the inverter circuit 7 (the potential at the output terminal a1) is the potential of the positive side output terminal of the rectifying/smoothing circuit 5, whereas the potential of the other output terminal (potential of the output terminal b1) is the potential of the negative side output terminal of the rectifying/smoothing circuit 5; and the state in which the potential of the one of the output terminals of the inverter circuit 7 (potential at the output terminal a1) is the potential of the negative side output terminal of the rectifying/smoothing circuit 5, whereas the potential of the other output terminal (potential of the output terminal b1) is the potential of the positive side output terminal of the rectifying/smoothing circuit 5. In this way, the inverter circuit 7 performs alternate switching between the forward polarity where the potential of the output terminal a1 is higher than that of the output terminal b1 and the reversed polarity where the potential of the output terminal a1 is lower than that of the output terminal b1. That is, the inverter circuit 7 converts the DC power inputted from the rectifying/smoothing circuit 5 into AC power and outputs the AC power.

In the third embodiment again, the effects similar to those of the first embodiment are achieved. In this embodiment, the restriking circuit 6 may apply the restriking voltage also when the output polarity switches from the reversed polarity to the forward polarity.

The shielded metal arc welding system and the welding power supply for shielded metal arc welding according to the present disclosure are not limited to the foregoing embodiments. The specific configuration of each part of the shielded metal arc welding system and the welding power supply for the shielded metal arc welding may be varied in many ways.

## Claims

1. A welding power supply for supplying electric power to a coated electrode, the welding power supply comprising:
a rectifying circuit that converts AC power inputted to the rectifying circuit into DC power; and
an inverter circuit that converts the DC power into AC power to be outputted to the coated electrode,
wherein the inverter circuit outputs a square-wave current.

2. The welding power supply according to claim 1, further comprising a DC reactor that smoothes an output from the rectifying circuit, wherein the DC reactor has a self-inductance in a range of 20 to 70 µH.

3. The welding power supply according to claim 1 or 2, further comprising a restriking circuit that applies restriking voltage to an output of the inverter circuit.

4. The welding power supply according to any one of claims 1 to 3, wherein AC power outputted from the inverter circuit has a frequency that is a natural number multiple of a frequency of the AC power inputted into the rectifying circuit.

5. The welding power supply according to claim 4, wherein the frequency of the AC power inputted into the rectifying circuit is 60 Hz, and the frequency of the AC power outputted from the inverter circuit is 300 Hz.

6. The welding power supply according to any one of claims 1 to 5, further comprising an auxiliary power supply circuit and a switching unit, wherein the auxiliary power supply circuit applies an auxiliary voltage lower than no-load voltage to an output terminal of the inverter circuit, and the switching unit performs switching between a state in which the auxiliary power supply circuit applies the auxiliary voltage and a state in which the inverter circuit is driven.

7. A shielded metal arc welding system comprising:
a welding power supply according to any one of claims 1 to 6; and
a coated electrode that receives power supply from the welding power supply.
